Europäisches Patentamt

European Patent Office

Office européen des brevets

(19)

(11) Numéro de publication : **0 446 129 A1**

(12) # DEMANDE DE BREVET EUROPEEN

(21) Numéro de dépôt : **91400610.1**

(51) Int. Cl.⁵ : **H04M 3/00**

(22) Date de dépôt : **06.03.91**

(30) Priorité : **06.03.90 FR 9002778**

(43) Date de publication de la demande :
**11.09.91 Bulletin 91/37**

(84) Etats contractants désignés :
**BE CH DE ES GB IT LI NL SE**

(71) Demandeur : **Trouvilliez, Bernard Romuald**
**47, Route de Chaon**
**F-18410 Brinon Sur Sauldre (FR)**

(72) Inventeur : **Trouvilliez, Bernard Romuald**
**47, Route de Chaon**
**F-18410 Brinon Sur Sauldre (FR)**

(74) Mandataire : **Tanguy, Gilbert André**
**SOCIETE INTERNATIONALE 19, rue de la Paix**
**F-75002 Paris (FR)**

(54) **Appareil de gestion d'attente téléphonique.**

(57)     Appareil de mise en attente téléphonique diffusant un fond musical de haute qualité.
   Selon l'invention, le fond musical est élaboré par une unité de lecture de disque par laser (11) et un message parlé est mémorisé à part par une unité de synthèse vocale (13), les signaux étant combinés par un mélangeur (14).

EP 0 446 129 A1

## APPAREIL DE GESTION D'ATTENTE TELEPHONIQUE

L'invention se rapporte à un appareil de gestion d'attente téléphonique assurant un accueil téléphonique de haute qualité, agréable et même utile pour l'auteur de l'appel mis en attente.

Un appareil de mise en attente téléphonique est ordinairement associé à un standard téléphonique auquel il est raccordé par un connecteur prévu à cet effet. Un système connu comporte essentiellement une sorte de magnétophone de qualité médiocre. Une musique est enregistrée sur la bande de la cassette. On y superpose souvent un message parlé. C'est donc pratiquement toujours une faible longueur de bande magnétique qui est lue et relue. Il en résulte une usure rapide entraînant une dégradation supplémentaire de la qualité sonore et de l'intelligibilité du message. En outre, ce système n'offre aucune souplesse d'utilisation car, pour modifier le message, il faut réenregistrer la musique et réciproquement. Le dosage sonore entre musique et parole ne peut se faire qu'à l'enregistrement et ne peut plus être modifié. Outre l'usure du support magnétique, les pannes mécaniques sont fréquentes.

Plus récemment sont apparus des systèmes numériques. Le "balayage" d'une mémoire permet la diffusion cyclique d'une mélodie et d'un message parlé superposés. La fiabilité est bonne et il n'y a pas de dégradation de la qualité, mais la séquence enregistrée est nécessairement de faible durée pour limiter le nombre d'unités de mémoire. Malgré tout, ce nombre reste élevé et l'appareil est donc coûteux.

L'invention a principalement pour but de proposer un appareil de gestion d'attente téléphonique offrant une très grande qualité sonore et une grande souplesse d'utilisation, notamment par la possibilité de modifier le fond musical aussi bien que le message parlé, indépendamment l'un de l'autre.

Un autre but de l'invention est de proposer un tel appareil où la qualité des informations enregistrées, tant musicales que parlées, ne se détériore pas dans le temps.

Un autre but de l'invention est de proposer un appareil fiable et peu coûteux.

L'invention a également pour but de proposer un appareil dans lequel les niveaux du fond musical et du message peuvent être réglés séparément.

L'idée de base de l'invention consiste à cumuler les avantages que peuvent offrir un dispositif de lecture de disque par laser pour la reproduction d'un fond musical de qualité et un dispositif de synthèse vocale pour la reproduction du message parlé.

Plus précisément, l'invention concerne donc un appareil de gestion d'attente téléphonique caractérisé en ce qu'il comporte en combinaison :

– une unité de lecture de disque par laser,
– une unité de synthèse vocale renfermant au moins un message parlé préenregistré sous forme numérique dans une mémoire,
– au moins un mélangeur à deux voies recevant des signaux provenant des deux unités précitées, et
– des moyens de couplage de la sortie dudit mélangeur à au moins une ligne téléphonique.

Un appareil réunissant les moyens énoncés ci-dessus répond de façon satisfaisante aux impératifs fixés.

– Pour ce qui concerne le fond sonore, on sait que le disque compact offre la meilleure qualité possible actuellement, très supérieure à celle de la ligne téléphonique. Une collection de quelques disques suffit largement au renouvellement fréquent du fond sonore. Ce renouvellement est instantané et le disque est pratiquement inusable. Le système de lecture est fiable.

– Pour ce qui concerne le message parlé, la qualité de la synthèse vocale est suffisante et aucune détérioration du message n'est à craindre puisque celui-ci est enregistré sous forme numérique dans une mémoire; la fiabilité est bonne. Le message peut être modifié en peu de temps si le système est équipé d'un micro et du convertisseur analogique/numérique nécessaire. Surtout, le "dosage" des volumes sonores entre la musique et le message parlé peut se faire au niveau du mélangeur ce qui simplifie grandement l'enregistrement du message parlé.

– Enfin, la capacité mémoire nécessaire au stockage du message parlé n'est pas trop importante, de sorte que le prix de revient de l'ensemble reste compétitif.

Selon un mode de réalisation possible, l'appareil est destiné à être raccordé à un standard téléphonique. L'opératrice dispose classiquement de moyens de commande lui permettant de faire "basculer" telle ou telle ligne sur l'appareil de gestion d'attente téléphonique. Si aucune autre ligne n'est en attente, le signal de commande provenant du central déclenche à la fois la lecture du disque compact et la reconstitution du message parlé par l'unité de synthèse vocale. Ledit message parlé est bien entendu "relu" cycliquement.

On sait qu'un disque audionumérique optique comporte des informations numériques permettant de positionner la tête de lecture en regard de telle ou telle plage et fournit aussi un minutage précis de l'enregistrement. Ces informations sont détectées et exploitées dans l'appareil pour la synchronisation du message parlé et du fond musical. Ainsi, si plusieurs personnes arrivant en attente consécutivement, la diffusion musicale se poursuit sans interruption tant qu'un correspondant est en attente.

Il est aussi parfaitement possible de disposer de plusieurs messages parlés différents, notamment en des langues différentes, que l'opératrice peut sélectionner en fonction de la personne qui appelle. Il suffit de prévoir plusieurs mélangeurs, par exemple autant de mélangeurs que de lignes téléphoniques raccordées au standard téléphonique. Chaque mélangeur reçoit du disque la même musique de fond sonore et le message parlé spécifique sélectionné par l'opératrice.

L'appareil est pourvu de moyens de visualisation permettant de connaître à tout moment un certain nombre d'informations telles que :
– la plage de musique diffusée,
– le type de commentaire sélectionné.

Il comporte aussi des moyens de calcul et de totalisation (constitués par des circuits électroniques simples comme des horloges, compteurs et mémoires) permettant de déterminer les paramètres suivants :
– temps de mise en attente du ou chaque correspondant,
– nombre de mises en attente pendant une période donnée (par exemple une journée),
– temps total de mise en attente pendant une période donnée.

Ces données sont très précieuses pour l'utilisateur, afin d'évaluer l'image de son entreprise auprès du public, qui dépend pour beaucoup de la qualité du "flux" téléphonique. Les temps d'attente excessifs sont ainsi détectés.

Selon un autre mode de réalisation, l'appareil est principalement destiné à être connecté à la place d'un poste téléphonique ou couplé à celui-ci.

Il comporte donc, en plus des moyens de base énoncés ci-dessus, un dispositif de connexion automatique ("décrocheur" automatique) à une ligne téléphonique, sensible aux signaux représentatifs de la sonnerie de ligne. L'appareil se comporte alors d'une façon analogue à celle d'un répondeur téléphonique, sans toutefois permettre l'enregistrement d'un message puisque ce n'est pas le but recherché, qui est de faire patienter. Par ailleurs, l'appareil peut être équipé de la plupart des fonctions décrites ci-dessus. Il peut être très utile lorsqu'on ne dispose pas d'un standard, puisqu'il assure lui-même le "décrochement" de la ligne. Il permet de faire patienter le correspondant pendant que l'on termine une tâche en cours (cas d'un dentiste ou d'un coiffeur, par exemple). La reprise de la ligne est opérée par décrochement du poste associé.

Le mode de réalisation à "décrochement" automatique peut aussi être avantageusement associé à un standard ne comportant pas d'interface adaptée, comme par exemple un type de standard ancien. Le retour du correspondant au standard peut être opéré par l'intermédiaire d'une commande manuelle prévue sur l'appareil. Cette commande déclenche un logiciel de numérotation automatique qui simule un transfert interne du poste vers le standard.

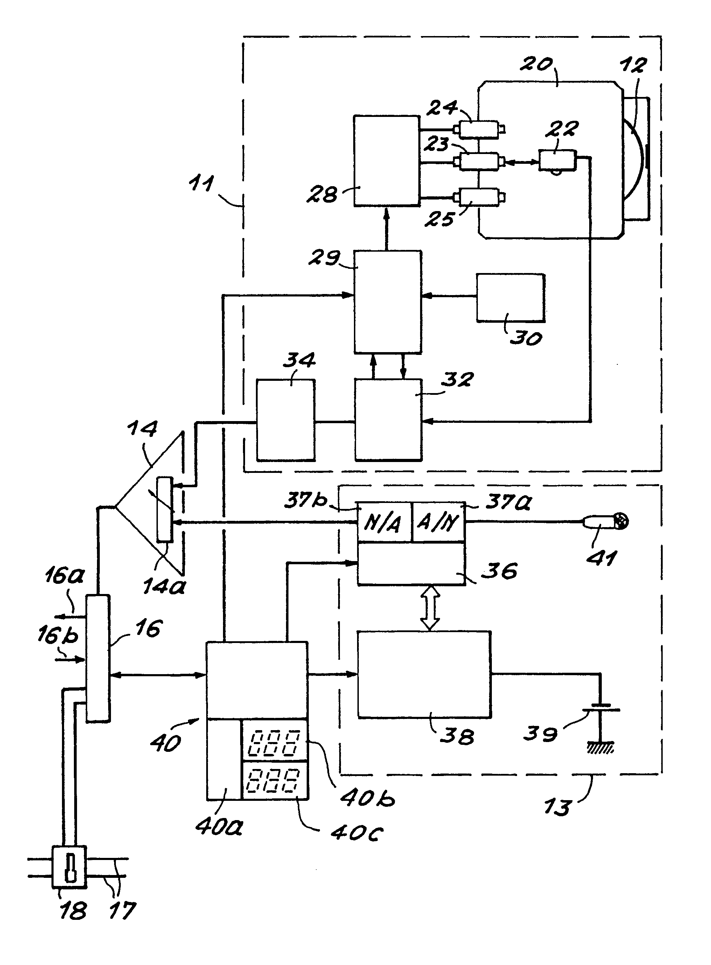

L'invention sera mieux comprise à la lumière de la description qui va suivre d'un mode de réalisation possible d'un appareil conforme à son principe, donnée à titre d'exemple et faite en référence au dessin annexé dans lequel :
– la figure unique est un schéma-bloc représentant l'agencement général d'un tel appareil.

Sur le dessin, l'appareil représenté comporte principalement une unité de lecture par laser 11 de disque optique audionumérique 12 (connu sous le nom de disque compact), une unité de synthèse vocale 13 et au moins un mélangeur à deux voies 14 connecté pour recevoir des signaux délivrés par les deux unités 11 et 13 précitées. Des moyens de couplage 16 formant interface sont interconnectés entre la sortie du mélangeur 14 et au moins une ligne téléphonique 17, ici par l'intermédiaire d'une prise téléphonique 18, normalisée. Cette interface comporte aussi une sortie "audio" 16a et une entrée "contact" 16b pour liaison éventuelle à un standard téléphonique.

L'unité de lecture 11 comporte une platine 20 d'entraînement du disque 12 incorporant la tête de lecture laser 22, un moteur 23 de déplacement de cette tête, un moteur 24 de chargement du disque et un moteur 25 d'entraînement en rotation du disque. Le moteur 25 est couplé au disque par un système d'entraînement direct (c'est-à-dire sans courroie) ce qui constitue une solution technologique très fiable. Les trois moteurs 23, 24 et 25 sont pilotés par un module logique d'asservissement 28 lui-même piloté par un module logique de commande 29 qui génère toutes les fonctions de pilotage de la platine et plus particulièrement :
– les consignes d'asservissement des moteurs,
– le positionnement de la tête de lecture.

Un pupitre de commande 30 est associé au module logique 29 pour toutes les fonctions de pilotage de l'unité de lecture. La tête de lecture laser 22 est reliée à un module de décodage 32 dont le dernier étage est constitué par un convertisseur analogique/numérique.La sortie de ce dernier est reliée à une entrée du mélangeur 14 via un filtre-préamplificateur 34. Le module 32 est piloté par le module logique de commande 29, mais renvoie vers celui-ci les signaux logiques de repérage des plages et de durée d'enregistrement musical. Le mélangeur 14 est conçu pour limiter la bande passante à celle de la ligne téléphonique.

L'unité de synthèse vocale comporte une mémoire numérique 38 et un codeur-décodeur 36 lui même associé à un convertisseur analogique-numérique 37a et à un convertisseur numérique-analogique 37b. La mémoire 38 est couplée au codeur-décodeur et est alimentée par une batterie 39 pour faire face à une coupure d'alimentation électrique. Le convertisseur analogique-numérique 37a est connecté à un microphone 41, tandis que le convertisseur numérique-analogique 37b est connecté à l'autre entrée du mélangeur 14. La mémoire numérique 38 a une capacité suffisante pour stocker des informations numériques représentatives d'un message parlé. Ce dernier est volontairement limité en durée, car les composants de la mémoire sont coûteux. Ici leur nombre est limité à la fois par la durée maximum prédéterminée du message, mais aussi par le fait qu'il s'agit d'un message parlé, sans fond musical. Chaque son peut donc être codé sur un plus petit nombre d'unités de mémorisation.

Selon une caractéristique importante, le mélangeur 14 est muni de moyens de réglage de volume 14a des deux voies. Le message parlé peut donc être plus ou moins détaché du fond musical à la reproduction. Cette possibilité est très utile car elle permet d'enregistrer le message parlé (micro 41) sans se soucier de l'intensité du fond musical. Bien entendu, ces moyens de réglage de "balance" des deux voies peuvent se situer à un autre étage que le mélangeur, notamment en amont, au niveau du filtre-préamplificateur 34 et/ou du convertisseur numérique analogique 37b.

Un module logique d'organisation 40 à microprocesseurs gère l'ensemble des fonctions de l'appareil. Il est donc relié aux moyens de couplage 16 (ou interface), au module logique de commande 29, au codeur-décodeur 36 et à la mémoire 38 et éventuellement au mélangeur 14 pour pouvoir régler les niveaux et la tonalité par le microprocesseur. Il comporte son propre clavier d'accès 40a et des moyens de visualisation 40b, 40c. Ces moyens de visualisation permettent, par exemple, d'afficher le temps de mise en attente du correspondant et le cumul du temps de mise en attente depuis un instant donné, par exemple le début de la journée. Dans le cas où l'appareil est prévu pour être relié à un standard, un moyen de visualisation supplémentaire est avantageusement prévu pour l'affichage du nombre de correspondants mis en attente. Toutes les fonctions de décomptage et de totalisation du temps de mise en attente sont câblées dans le module d'organisation 40.

Ce module renferme en outre, ici, un circuit de connexion automatique (décrocheur) sensible aux signaux représentatifs de la sonnerie de ligne, transmis par l'interface 16. Il est aussi conçu pour assurer le raccrochement automatique en fin d'attente. L'ordre de raccrochement est élaboré en réponse à un décrochement du combiné téléphonique associé, ou à la perte du correspondant. Les signaux correspondants sont transmis par l'interface.

Bien entendu l'invention n'est nullement limitée au mode de réalisation qui vient d'être décrit. En particulier, s'il est conçu pour être relié à un standard téléphonique, sa mémoire peut être augmentée pour stocker plusieurs messages parlés susceptibles d'être sélectionnés par l'opératrice en fonction du correspondant. Il y a alors lieu d'augmenter aussi le nombre de synthétiseurs et de mélangeurs pour permettre la diffusion de plusieurs messages parlés différents, respectivement sur des lignes téléphoniques en attente simultanément. Le fond musical reste le même pour tous les correspondants, de sorte que l'unité de lecture 11 est commune à tous les mélangeurs.

**Revendications**

1. Appareil de gestion d'attente téléphonique caractérisé en ce qu'il comporte en combinaison :
   – une unité de lecture de disque par laser (11),
   – une unité de synthèse vocale (13) renfermant au moins un message parlé préenregistré sous forme numérique dans une mémoire,
   – au moins un mélangeur à deux voies (14) recevant des signaux provenant des deux unités précitées, et
   – des moyens de couplage (16) de la sortie dudit mélangeur à au moins une ligne téléphonique.

2. Appareil selon la revendication 1, caractérisé en ce qu'il comporte des moyens de connexion à un standard téléphonique.

3. Appareil selon la revendication 1, caractérisé en ce qu'il comporte un circuit de connexion automatique (40) à une ligne téléphonique sensible aux signaux représentatifs de la sonnerie de ligne.

4. Appareil selon l'une des revendications précédentes, caractérisé en ce que l'unité de synthèse vocale (13) comprend un convertisseur analogique-numérique (37a) et une mémoire numérique (38) de capacité suffisante pour stocker des informations numériques représentatives dudit message parlé.

5. Appareil selon l'une des revendications précédentes, caractérisé en ce qu'il est muni de moyens de réglage de volume (14a) des deux voies précitées.

6. Appareil selon l'une des revendications 1 ou 2, caractérisé en ce qu'il comporte des moyens de totalisation et de visualisation du nombre de mises en attente.

7. Appareil selon l'une des revendications précédentes, caractérisé en ce qu'il comporte des moyens de décomptage du temps de mise en attente (40) du ou de chaque correspondant.

8. Système selon l'une des revendications précédentes, caractérisé en ce qu'il comporte des moyens de totalisation (40) du temps de mise en attente.

Office européen
des brevets

**RAPPORT DE RECHERCHE EUROPEENNE**

Numero de la demande

EP 91 40 0610

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| Y | WO-A-8 705 765 (LEVY) * Page 4, ligne 1 - page 5, ligne 22; page 8, lignes 10-23; page 17, lignes 11-19 * | 1-5 | H 04 M 3/00 |
| Y | PATENT ABSTRACTS OF JAPAN, vol. 10, no. 363, (E-461)[2420], 05 décembre 1986; & JP-A-61 158 254 (TOSHIBA) 07-07-186 * Le document en entier * | 1-5 | |
| A | FR-A-2 536 612 (SOC. D'ETUDES ET DE REALISATIONS AUDIOVISUELLES) * Page 1, lignes 3-7; page 2, lignes 2-6 * | 1,4 | |
| A | US-A-3 943 290 (GOLDEN) * Abrégé; colonne 6, lignes 5-34 * | 1,3,6,7 | |
| A | GB-A-2 204 463 (CALLSCAN) * Page 1, ligne 23 - page 3, ligne 2 * | 6-8 | |
| | | | **DOMAINES TECHNIQUES RECHERCHES (Int. Cl.5)** |
| | | | H 04 M |

Le présent rapport a été établi pour toutes les revendications

| Lieu de la recherche | Date d'achèvement de la recherche | Examinateur |
|---|---|---|
| LA HAYE | 29-05-1991 | VANDEVENNE M.J. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
 
& : membre de la même famille, document correspondant

EPO FORM 1503 03.82 (P0402)